# FASCICULE DE BREVET EUROPEEN

(11) **EP 3 589 445 B1**
(45) Date de publication et mention de la délivrance du brevet: **24.03.2021**
(21) Numéro de dépôt: 18709707.6
(22) Date de dépôt: 26.02.2018
(51) Int. Cl.: B23Q 3/06, B25B 5/08

(54) **BROCHE A SERRAGE RAPIDE**
SCHNELLSPANNSPINDEL
QUICK-CLAMPING SPINDLE

(30) Priorité: 28.02.2017 FR 1770200
(43) Date de publication de la demande: 08.01.2020
(73) Titulaire: Norelem SAS, 10280 Fontaine les Grès (FR)
(72) Inventeur: LE MEUR, Olivier, 10410 Saint Parres aux Tertres (FR)
(74) Mandataire: Loyer & Abello
(86) Numéro de dépôt international: PCT/FR2018/050451
(87) Numéro de publication internationale: WO 2018/158532

(56) Documents cités:
- FR-A1- 2 972 664
- US-A- 2 544 809
- US-A- 2 658 416

## Description

La présente invention est relative à une broche à serrage rapide comportant un dispositif de pré-blocage en position.

La broche à serrage rapide est en particulier décrite dans les deux documents FR-2.972.664-A et FR-2.995.544-A. Une telle broche comprend un corps de broche muni d'un organe de serrage à une de ses extrémités, une tige de commande de l'application/retrait de l'organe de serrage, contenue dans le corps de broche, et un organe de manœuvre et de commande de l'organe de serrage placé à l'autre de ses extrémités sur un épaulement de serrage d'une ou plusieurs pièces à serrer. La broche comporte un organe de commande simultanée de l'application/retrait de l'organe de serrage progressif des pièces entre l'organe de serrage et un support de serrage. Cet organe de commande simultanée comprend un axe transversal porté par la tige de commande et engagé à glissement dans une lumière ménagée dans la paroi du corps de broche.

Si un tel ensemble donne généralement satisfaction, par contre il est apparu que, dans certaines configurations et/ou applications, il serait souhaitable de pouvoir obtenir un pré-blocage en position avant de réaliser un serrage complet.

Aussi, un des buts de la présente invention est-il de fournir une broche à serrage rapide qui permet un pré-blocage ou pré-verrouillage en position.

Un autre but de l'invention est de fournir une telle broche à un coût compétitif.

Ces buts, ainsi que d'autres qui apparaîtront par la suite, sont atteints par une broche à serrage rapide du genre comprenant deux pièces, d'une part un corps de broche muni d'un organe de serrage à une de ses extrémités et d'autre part une tige de commande de l'application/retrait de l'organe de serrage, contenue dans le corps de broche, ainsi qu' un organe de manoeuvre et de commande de l'organe de serrage placé à l'autre de ses extrémités, lequel organe de commande simultanée comprend une rampe ménagée dans la paroi du corps de broche coopérant avec un axe transversal porté par la tige de commande, laquelle broche est caractérisée, selon la présente invention, par le fait qu'elle comprend en outre un dispositif pour pré-verrouiller en rotation la tige de commande dans le corps de broche, lequel dispositif comprend, d'une part, un élément mâle porté par l'une des deux pièces constituant la broche de serrage et, d'autre part, un élément femelle porté par l'autre de ces deux pièce, l'élément mâle comprenant un logement radial ménagé dans le corps de broche et ouvert vers la tête de commande et un ergot situé dans ce logement radial, un ressort étant situé dans le logement radial et présentant une extrémité qui repose dans le fond de ce logement et une autre extrémité qui appuie sur l'ergot, l'élément femelle étant constitué d'une succession d'alvéoles situées sur le pourtour de la tête de commande au même niveau que le logement radial, la première alvéole étant décalée angulairement par rapport à l'axe de l'ergot d'un angle tel que, dès que la tige de commande est libre en rotation, l'ergot puisse s'introduire dans cette première alvéole.

Selon un mode de réalisation de la présente invention, l'ergot est constitué par une bille.

Selon un mode de réalisation de la présente invention, cette succession d'alvéoles est constituée par des cannelures parallèles à l'axe de rotation de la tête de commande.

De préférence, ces cannelures en forme de V, sont disposées sur toute la hauteur de la paroi de la tête de commande.

La description qui va suivre, et qui ne présente aucun caractère limitatif doit être lue en regard des figures annexées, parmi lesquelles :
- la figure 1a est une vue de face d'une broche de serrage selon la présente invention en position desserrée ;
- la figure 1b est vue en coupe selon la ligne A-A de la figure 1 ;
- la figure 1c est une en coupe selon la ligne B-B de la figure 1 ;
- la figure 2a est une vue de face de la broche de serrage, lorsque la broche de serrage est en position d'approche ;
- la figure 2b est une en coupe selon la ligne C-C de la figure 2a
- la figure 2c est vue en coupe selon la ligne D-D de la figure 2a, lorsque la broche de serrage est en position serrée ;
- la figure 3a est une vue de face de la broche de serrage, lorsque la broche de serrage est en position de pré-blocage ;
- la figure 3b est une en coupe selon la ligne E-E de la figure 3a
- la figure 3c est vue en coupe selon la ligne F-F de la figure 3a,

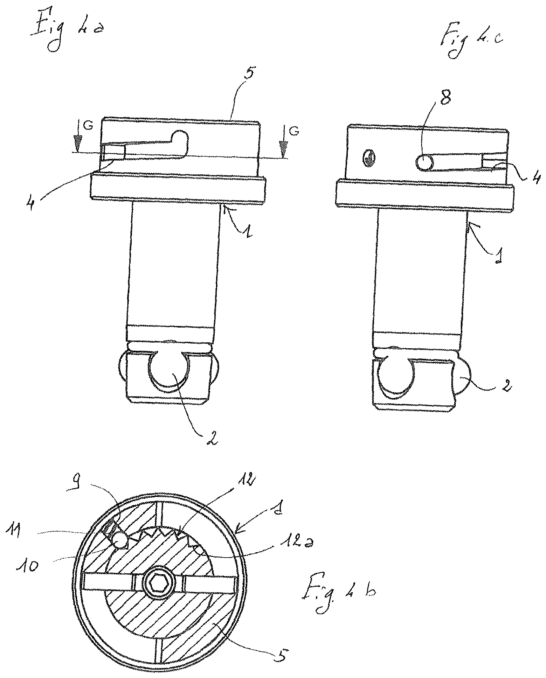

- la figure 4a est une vue de face de la broche de serrage, lorsque la broche de serrage est en position serrée ;
- la figure 4b est une en coupe selon la ligne G-G de la figure 3a ; et
- la figure 5 est une vue du détail H de la figure 1b.

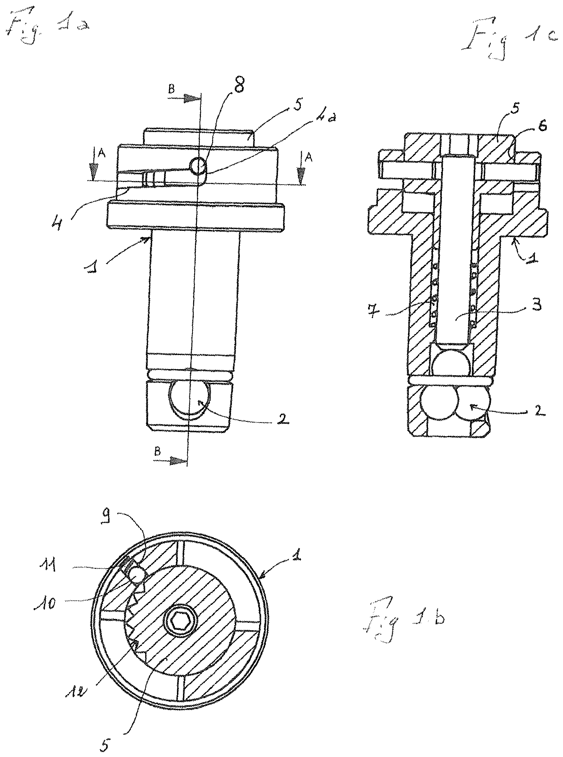

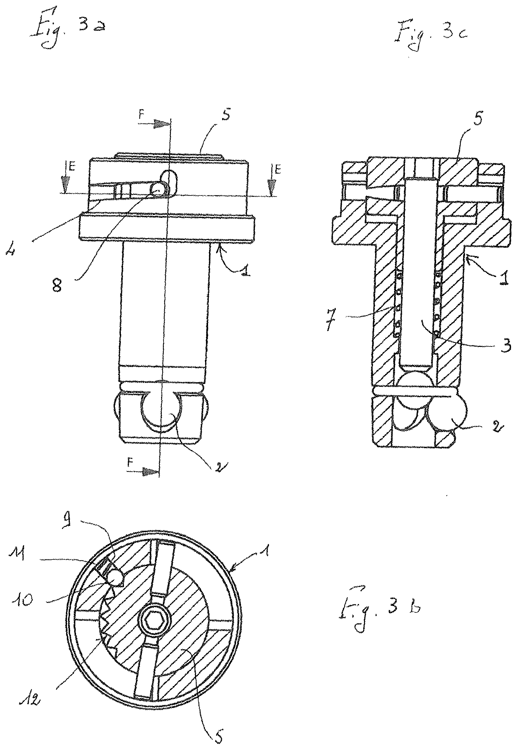

Ainsi qu'on peut le voir notamment sur les figure 1 et 3, une broche à serrage rapide selon la présente invention est du genre comprenant notamment, d'une part, un corps de broche 1 muni d'un organe de serrage 2 à une de ses extrémités 1a, et, d'autre part, une tige de commande 3 de l'application/retrait de l'organe de serrage 2, contenue dans le corps de broche 1. Cette broche de serrage comprend aussi un organe de manoeuvre et de commande de cet organe de serrage 2 placé à l'autre extrémité de la tige de commande 3.

Cet organe de manœuvre et de serrage comprend, d'une part, une rampe hélicoïdale 4 ménagée dans la paroi du corps de broche 1 et, d'autre part, une tête de manœuvre 5 qui est disposée au sommet de la tige de commande 3, dont le diamètre est supérieur à celui de cette tige de commande 3 mais inférieur à celui du corps de broche 1 et qui comporte au moins un axe transversal 8 coopérant avec la rampe hélicoïdale 4. Pour des raisons d'équilibre notamment, il peut être avantageux que la tête de manœuvre 5 comporte deux axes transversaux 8 et 8' diamétralement opposés comme dans le présent exemple de réalisation.

La rampe hélicoïdale 4 comporte à son extrémité finale haute une encoche 4a verticale et dirigée vers la tête de manœuvre 5 : lorsque la broche est en position desserrée, le doigt 8, dans le présent exemple de réalisation, est bloqué dans cette encoche 4a.

Ainsi cette tête de manœuvre 5 est située, en tout ou partie, dans un logement cylindrique 6 situé à l'extrémité 1b du corps de broche 1 opposée à son extrémité 1a munie de l'organe de serrage 2.

L'organe de serrage est, selon le présent exemple de réalisation, constitué de trois billes 2 réparties à 120° dans un plan orthogonal à l'extrémité 1a du corps de broche 1.

L'ensemble constitué de la tête de manœuvre 5 et de la tige de commande 3 est placé à l'intérieur du corps de broche 1 et monté sur ce dernier par l'intermédiaire d'un ressort de rappel 7 prenant appui, par une de ses extrémités, sur la face de cette tête de manœuvre 5 en regard de la tige de commande 3 et, par son autre extrémité, sur une surface d'appui situé dans le corps de broche 1 et traversé par la tige de commande 3.

Selon la présente invention, l'axe transversal est constitué par un doigt 8 qui coopère avec la rampe hélicoïdale 4 ménagée dans le corps de broche 1.

Une telle broche de serrage ainsi que son fonctionnement sont par exemple décrits dans le document FR-2.995.544-A, auquel on pourra se reporter.

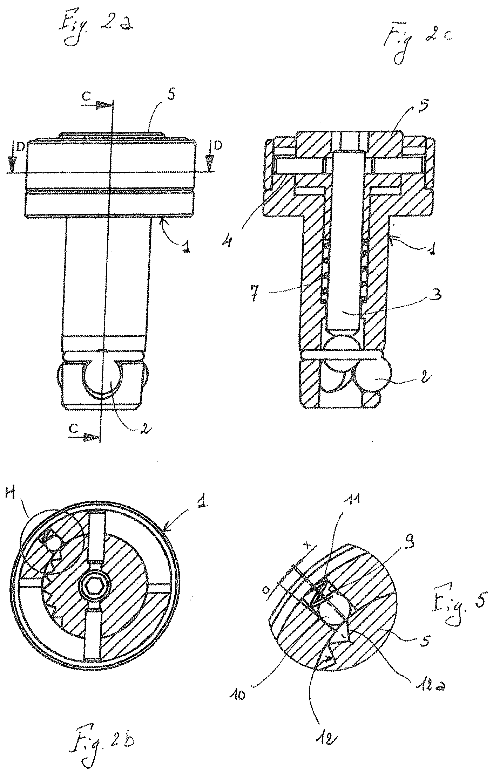

En enfonçant la tête de manœuvre 5, on fait descendre le doigt 8 vers la rampe hélicoïdale 4 : on désigne par « approche » le fait que le doigt 8 vient au contact de cette rampe hélicoïdale 4 (figures 2a à 2c).. En faisant tourner d'un angle très faible cette tête de manœuvre 5, on engage le doigt 8 dans cette rampe hélicoïdale 4 : il y a alors un pré-blocage de la broche, car l'action de poussée puis de rotation exercée sur la tête de manœuvre 5 a eu aussi pour résultat une action de poussée sur la tige de commande 3 et par conséquent un début de sortie de l'organe de serrage 2, ce qui permet cette position de pré-blocage (figures 3a à 3c) : si on relâche alors la tête de manœuvre 5, la broche reste en position de pré-blocage comme décrit ci-après.

En effet, selon la présente invention, la broche de serrage comprend, en outre, un dispositif pour pré-verrouiller en rotation la tige de commande 3, et donc la tête de manœuvre 5, dans le corps de broche 1 : ainsi la tête de manœuvre 5 et la tige de commande 3 sont maintenue dans cette position de serrage partiel ou de pré-blocage.

Le dispositif de pré-verrouillage comprend, d'une part, un élément mâle porté par une des deux pièces constituant la broche de serrage, et, d'autre part, un élément femelle porté par l'autre pièce constituant la broche de serrage.

Selon le présent exemple de réalisation, l'élément mâle est porté par la pièce fixe, en l'occurrence le corps de broche 1 selon le présent exemple de réalisation, et l'élément femelle par la pièce mobile, en l'occurrence la tête de manoeuvre 5.

L'élément mâle comprend un logement radial 9 ménagé dans le corps de broche 1 et ouvert vers la tête de commande 3 et un ergot 10 qui est situé dans ce logement radial 9. Dans ce logement radial 9 est disposé un ressort 11, dont une extrémité 11a repose dans le fond de ce logement 9 et dont l'autre extrémité, 11b qui est libre, appuie sur l'ergot 10. Selon le présent exemple de réalisation, l'ergot 10 est constitué par une bille. Toutefois, dans d'autres modes de réalisation alternatifs, l'ergot présente une autre forme.

Quant à l'élément femelle, il est constitué d'une succession d'alvéoles 12 situées sur le pourtour de la tête de manœuvre au même niveau que le logement radial 9.

Selon le présent exemple de réalisation, cette succession d'alvéoles 12 est constituée par des cannelures parallèles à l'axe de rotation de la tête de commande 5 : ces cannelures 12, de préférence en forme de V, sont disposées, par exemple, sur toute la hauteur de la paroi de la tête de commande 5.

Ainsi, la bille 10 est poussée par le ressort 11 dans une des cannelures 12 : le diamètre de cette bille 10 est légèrement inférieur à la distance entre les deux sommets du V.

En appuyant sur la tête de manœuvre 5, le doigt 8 vient au contact de la rampe hélicoïdale 4, et en commençant à tourner cette tête de manœuvre 5, le doigt 8 vient en approche (figures 2a à 2c) et la bille 10 est à l'approche de la première cannelure 12a (figure 2b). En continuant de tourner la tête de manœuvre 5, la bille 10 pénètre dans cette première alvéole 12a, le doigt 8 passant ainsi de sa position d'approche à sa position de pré-blocage : la broche est ainsi dans une position de pré-blocage ou pré-verrouillage (figures 3a à 3b). La bille 10 est maintenue dans cette première alvéole 12a par l'action du ressort 11.

En exerçant un couple supplémentaire sur la tête de manœuvre 5, le doigt 8 décrit la rampe hélicoïdale et les cannelures 12 défilent devant la bille 10 qui en fin de course doit se bloquer dans une cannelure et être maintenue dans celle-ci également par l'action du ressort 11.

Comme l'aura compris l'homme du métier, on crée des points durs dans la course de serrage qui vont permettre de maintenir le doigt 8 dans la rampe hélicoïdale 4 à différentes positions angulaires déterminées par la position des alvéoles 12.

Pour obtenir cet engagement automatique de la rampe hélicoïdale 4 en fin de course d'approche, il faut positionner de manière relativement précise la première alvéole avec un décalage angulaire par rapport à l'alignement de la course d'approche. Ainsi quand on libère la rotation de la tige de commande 3 autour de son axe en fin de course d'approche, la bille 10 poussée par son ressort 11 va chercher à s'engager dans l'alvéole légèrement décalée et va entraîner la tige de commande 3 en rotation autour de son axe pour venir se loger dans la première alvéole. Le doigt 8 est alors légèrement engagé dans la rampe hélicoïdale 4 et la bille 10, repoussée dans son alvéole, maintient cette position d'où la notion de blocage en fin de course d'approche.

L'angle correspondant au décalage angulaire décrit ci-dessus est choisi de manière que le centre de la bille 10 soit légèrement décalé d'une valeur X par rapport à l'amorce de l'alvéole : la tige de commande 3 étant libre en rotation, la bille 10 pourra s'introduire dans l'alvéole pour la faire tourner.

La tige de commande 3 va faire une rotation autour de son axe d'un angle α pour engager le doigt 8 dans la rampe hélicoïdale 4. Pour maximiser la valeur de cet angle α et ainsi maximiser l'engagement du doigt 8 dans la rampe hélicoïdale 4, il faut minimiser la valeur de la cote X.

Pour retirer cette broche de serrage, il suffit de tourner la tête de manœuvre en sens inverse pour faire décrire aux doigts 8 et 8' la rampe hélicoïdale 4 jusqu'à ce doigt pénètre dans l'encoche 4 faisant ainsi remonter la tête de manœuvre et rentrer l'organe de serrage 2.

Une telle broche selon la présente invention est particulièrement utile pour maintenir en position des pièces à usiner.

## Revendications

1. Broche à serrage rapide du genre comprenant deux pièces, d'une part un corps de broche (1) muni d'un organe de serrage (2) à une de ses extrémités et d'autre part une tige de commande (3) de l'application/retrait dudit organe de serrage (2), contenue dans ledit corps de broche (1), ainsi qu'un organe de manœuvre et de commande de l'organe de serrage placé à l'autre des extrémités dudit corps de broche (1), lequel organe de commande simultanée comprend une rampe hélicoïdale (4) ménagée dans la paroi dudit corps de broche (1) coopérant avec un axe transversal porté par ladite tige de commande (3), **caractérisée par le fait qu'**elle comprend en outre un dispositif pour bloquer en rotation ladite tige de commande (3) dans ledit corps de broche (1), lequel dispositif comprend, d'une part, un élément mâle porté par l'une des deux pièces constituant la broche de serrage et, d'autre part, un élément femelle porté par l'autre de ces deux pièces ; l'élément mâle comprenant un logement radial (9) ménagé dans le corps de broche (1) et ouvert vers la tête de commande (3) et un ergot situé dans ledit logement radial, un ressort (11) situé dans ledit logement radial présentant une extrémité reposant contre le fond du logement et une autre extrémité qui appuie sur l'ergot, l'élément femelle étant constitué d'une succession d'alvéoles (12) situées sur le pourtour de la tête de commande au même niveau que le logement radial (9), la première alvéole étant décalée angulairement par rapport à l'axe de l'ergot d'un angle tel que, dès que la tige de commande est libre en rotation, l'ergot puisse s'introduire dans cette première alvéole.

2. Broche à serrage rapide selon la revendication 1, **caractérisée par le fait que** l'ergot est constitué par une bille (10).

3. Broche à serrage rapide selon la revendication 1 ou 2, **caractérisée par le fait que** la succession d'alvéoles est constituée par des cannelures parallèles à l'axe de rotation de la tête de commande.

4. Broche à serrage rapide selon la revendication 3, **caractérisée par le fait que** les cannelures en forme de V sont disposées sur toute la hauteur de la paroi de la tête de commande.

## Patentansprüche

1. Schnellverschlussspindel der zwei Teile umfassenden Art, zum einen Spindelkörper (1), der an einem seiner Enden mit einem Klemmglied (2) versehen ist, und zum anderen einen Betätigungsschaft (3) zum Anlegen/Zurückziehen des Klemmelements (2), der in dem Spindelkörper (1) enthalten ist, sowie ein Glied zum Bedienen und Betätigen des Klemmglieds, das an dem anderen der Enden des Spindelkörpers (1) platziert ist, wobei das Glied zur gleichzeitigen Betätigung eine spiralförmige Rampe (4) umfasst, die in der Wand des Spindelkörpers (1) ausgeführt ist und mit einer von dem Betätigungsschaft (3) getragenen Querachse zusammenwirkt, **dadurch gekennzeichnet, dass** sie ferner eine Vorrichtung umfasst, um den Betätigungsschaft (3) in dem Spindelkörper (1) gegen Drehung zu sichern, wobei die Vorrichtung zum einen ein männliches Element, das von einem der beiden Teile, aus denen die Verschlussspindel gebildet ist, getragen wird, und zum anderen ein weibliches Element umfasst, das von dem anderen dieser beiden Teile getragen wird, wobei das männliche Element eine radiale Aufnahme (9), die in dem Spindelkörper (1) ausgeführt und zum Betätigungskopf (3) hin offen ist, und eine in der radialen Aufnahme angeordnete Nase umfasst, wobei eine in der radialen Aufnahme angeordnete Feder (11) ein Ende aufweist, das am Boden der Aufnahme anliegt, sowie ein anderes Ende, das an der Nase anliegt, wobei das weibliche Element durch eine Abfolge von Hohlräumen (12) gebildet wird, die am Umfang des Betätigungskopfs auf derselben Höhe wie die radiale Aufnahme (9) angeordnet sind, wobei der erste Hohlraum bezüglich der Achse der Nase in einem solchen Winkel winkelförmig versetzt ist, dass die Nase in diesen ersten Hohlraum hineingehen kann, wenn der Betätigungsschaft frei drehbar ist.

2. Schnellverschlussspindel nach Anspruch 1, **dadurch gekennzeichnet, dass** die Nase durch eine Kugel (10) gebildet wird.

3. Schnellverschlussspindel nach Anspruch 1 oder 2, **dadurch gekennzeichnet, dass** die Abfolge von Hohlräumen durch parallel zu der Rotationsachse des Betätigungskopfs verlaufende Nuten gebildet werden.

4. Schnellverschlussspindel nach Anspruch 3, **dadurch gekennzeichnet, dass** die V-förmigen Nuten über die gesamte Höhe der Wand des Betätigungskopfs angeordnet sind.

## Claims

1. A quick-clamping spindle comprising two pieces, firstly a spindle body (1) supplied with a clamping member (2) at one of the ends thereof and secondly a control rod (3) for controlling the use/withdrawal of said clamping member (2), which rod is contained in said spindle body (1), as well as a member for maneuvering and controlling the clamping member placed at the other of the ends of said spindle body (1), which simultaneous control member comprises a helical ramp (4) provided in the wall of said spindle body (1) engaging a transverse shaft borne by said control rod (3), **characterized in that** it further comprises a device for rotationally blocking said control rod (3) in said spindle body (1), which device comprises, firstly, a male element borne by one of the two pieces forming the clamping spindle and, secondly, a female element borne by the other of these two pieces; the male element comprising a radial housing (9) provided in the spindle body (1) and open toward the control head (3) and a lug located in said radial housing, a spring (11) located in said radial housing having an end resting against the bottom of the housing and another end which bears on the lug, the female element being formed from a series of cavities (12) that are located on the circumference of the control head at the same level as the radial housing (9), the first cavity being angularly offset with respect to the axis of the lug by an angle such that, once the control rod is free to rotate, the lug can be inserted into this first cavity.

2. The quick-clamping spindle as claimed in claim 1, **characterized in that** the lug is formed by a ball (10).

3. The quick-clamping spindle as claimed in claim 1 or 2, **characterized in that** the series of cavities is formed by grooves parallel to the rotational axis of the control head.

4. The quick-clamping spindle as claimed in claim 3, **characterized in that** the grooves in the shape of a V are placed over the entire height of the wall of the control head.
